**Europäisches Patentamt**

**European Patent Office**

**Office européen des brevets**

(11) Veröffentlichungsnummer: **0 264 579 B1**

(12) **EUROPÄISCHE PATENTSCHRIFT**

(45) Veröffentlichungstag der Patentschrift:
03.01.90

(51) Int. Cl.⁴: **F16H 1/445**

(21) Anmeldenummer: **87112294.1**

(22) Anmeldetag: **25.08.87**

(54) **Sperrbares Ausgleichsgetriebe.**

(30) Priorität: **24.10.86 DE 3636175**

(43) Veröffentlichungstag der Anmeldung:
**27.04.88 Patentblatt 88/17**

(45) Bekanntmachung des Hinweises auf die Patenterteilung:
**03.01.90 Patentblatt 90/1**

(84) Benannte Vertragsstaaten:
**DE ES FR GB IT SE**

(56) Entgegenhaltungen:
**EP-A- 0 185 247**
**DE-A- 3 313 283**
**FR-A- 2 434 969**
**GB-A- 1 290 542**
**US-A- 3 460 404**

(73) Patentinhaber: **Bayerische Motoren Werke Aktiengesellschaft, Patentabteilung AJ-3 Postfach 40 02 40 Petuelring 130, D-8000 München 40(DE)** .

(72) Erfinder: **Winkam, Gamjad, Ahornweg 20, D-8051 Zolling(DE)**
Erfinder: **Lommerzheim, Manfred, Adolf-Harbig-Strasse 3, D-8056 Neufahrn(DE)**

## Beschreibung

Die Erfindung bezieht sich auf ein sperrbares Ausgleichsgetriebe für Kraftfahrzeuge nach dem Oberbegriff des Hauptanspruchs.

Ein solches gattungsgemäßes Ausgleichsgetriebe zeigt die DE-A 33 13 283. Bei einer Ausgestaltung dieser Vorveröffentlichung ist ein im Getriebegehäuse verschiebbar angeordneter Hydraulikkolben über ein Radiallager auf einer Radabtriebswelle drehbar gelagert. Am anderen, in das Ausgleichsgehäuse hineinragenden Ende der Radabtriebswelle sitzt, über einen Stützring gesichert, das Achswellenrad. Zwischen diesem und dem Ausgleichsgehäuse wiederum ist der die Ausgleichssperre darstellende Lamellensatz vorgesehen. Bei Betätigung der Sperre versucht der Kolben die Abtriebswelle nach außen zu ziehen, die dabei über den Stützring das Achswellenrad mitnimmt. Das Achswellenrad preßt den Lamellensatz gegen eine Stützwand des Ausgleichsgehäuse und bewirkt eine reibschlüssige Verbindung zwischen Ausgleichsgehäuse und Radabtriebswelle.

Ein Nachteil dieser Lösung liegt darin, daß der Kräfteverlauf bei Betätigung der Ausgleichssperre über das zwichen dem Hydraulikkolben und Radabtriebswelle angeordnete Radiallager führt. Das Radiallager muß, um der Belastung standzuhalten, entsprechend groß dimensioniert werden. Dies ist schon aus Kosten-, aber auch als Platzgründen nicht immer wünschenswert. Ein weiterer und noch viel größerer Nachteil zeigt sich bei diesem Aufbau dadurch, daß durch das übertragene Moment der zwischen dem Ausgleichskegelrad und dem Achswellenrad herrschende Zahndruck versucht, das Achswellenrad in Richtung Lamellensatz zu verschieben und damit das Ausgleichsgetriebe bis zu einem gewissen Grad zu sperren. Mit anderen Worten, beim normalen Fahrbetrieb weist die vorbekannte Differentialsperre immer eine gewisse und unerwünschte Sperrwirkung auf.

In einem weiteren Ausführungsbeispiel der Vorveröffentlichung ist zwischen dem Lamellensatz und der Radabtriebswelle ein Lamellenträger vorgesehen, der über eine Keilverzahnung verdrehfest, aber axial verschiebbar auf dieser Welle sitzt. Über eine weitere Keilverzahnung ist auf dem Lamellenträger das Achswellenrad gehalten, das sich wiederum am Ausgleichsgehäuse abstützt. Auf diese Weise wird erreicht, daß der zuvor beschriebene Nachteil einer dauernden Sperrung des Ausgleichsgetriebes durch den Zahndruck nicht auftritt. Jedoch haftet dieser Lösung ein anderer Nachteil an. Das über das Antriebsritzel und die Ausgleichskegelräder eingeleitete Moment wird vom Achswellenrad über den Lamellenträger auf die Abtriebswelle geleitet und die einzelnen Zähne der Keilverzahnung werden gegeneinander gepreßt. Ist bei diesem Betriebszustand die Ausgleichssperre eingeschaltet und soll die Sperrwirkung wieder aufgehoben werden, läßt sich durch diese Verspannung in der Keilverzahnung der Lamellenträger nicht mehr axial bewegen. Das Getriebe bleibt gesperrt bis das Antriebsmoment zurückgenommen wird.

In einer weiteren Ausführungsform stützt sich der Lamellensatz wiederum am Achswellenrad ab, wobei dieses über die Verzahnung der Ausgleichskegelräder die Anpreßkraft der Lamellen in das Ausgleichsgehäuse weiterleitet. Der Nachteil dieser Lösung liegt darin, daß beim Sperren aufgrund des Kräfteverlaufs das Ausgleichsgehäuse mit seinem Tellerrad ein wenig axial verschoben wird. Das Tellerrad kämmt aber mit einem sehr genau eingestellten Zahnspiel mit dem Antriebsritzel. Beim Sperrvorgang wird demnach dieses Zahnspiel verändert, was zu Verklemmungen, Verzwängungen und Geräuschentwicklungen führen kann.

Aufgabe der Erfindung ist es, ein gattungsgemäßes Ausgleichsgetriebe so weiterzubilden, daß die erwähnten Nachteile nich auftreten, bei dem insbesondere für die Übertragung der Anpreßkräfte auf dem Lamellenansatz keine zu groß dimensionierten Wälzlager benötigt werden, nach dem Sperren ein sicheres Lösen gewährleistet ist, die Sperrwirkung nur bei bewußter Druckbeaufschlagung eintritt und schließlich das Zahnspiel zwischen Tellerrad und Antriebsritzel während eines Sperrvorgangs nicht beeinträchtigt wird.

Die Aufgabe wird erfindungsgemäß mit den Merkmalen des Hauptanspruchs gelöst. Vorteilhafte Ausgestaltungen dieses Erfindungsgedankens ergeben sich aus den Unteransprüchen.

Nach dem Hauptanspruch wird also die Ampreßkraft über ein Axiallager am Getriebegehäuse abgestützt. Ein solches Axiallager läßt eine erheblich höhere Tragzahl zu als die im Stand der Technik erwähnten Radiallager, so daß das Lager keine unvertretbaren Dimensionen annimmt.

In einer zweckmäßigen Ausgestaltung ist zwischen dem Lamellensatz und dem Axiallager ein Übertragungsglied vorgesehen. Dieses Übertragungsglied ist kräftemäßig vom Ausgleichsgehäuse getrennt und kann so die Anpreßkraft auf das Getriebgehäuse ohne Einfluß auf das Ausgleichsgehäuse übertragen. In einer bevorzugten Ausführung weist das Übertragungsglied einen Kreisring auf, der über eine äußere Führung des Ausgleichsgehäuses geschoben ist. Der Kreisring stößt mit der einen Stirnseite an das am Getriebegehäuse angeordnete Axiallager an. Die gegenüberliegende Seite geht in gabelförmige Arme über, die in das Ausgleichsgehäuse hineingreifen und mit dem Lamellensatz zusammenwirken.

In einem anderen bevorzugten Ausführungsbeispiel liegt das Axiallager zwischen einer Radabtriebswelle und dem Getriebegehäuse. Zu diesem Zweck ist in bekannter Weise zwischen dem Lamellensatz und der Radabtriebswelle ein Stützring vorgesehen, der die Anpreßkraft in die Radabtriebswelle einleitet. Dabei kann der Stützring vor dem Achswellenrad vorgesehen sein, so daß der Kräfteverlauf über das Achswellenrad führt. Bei dieser Lösung ist jedoch zu beachten, daß der Abstand zwischen dem Stützring und dem Lagersitz des Axiallagers sehr genau eingehalten werden muß, um das richtige Zahnspiel zwischen Achswellenrad und Ausgleichskegelräder zu erhalten.

In einer weiteren vorteilhaften Ausführung liegt der Stützring hinter dem Achswellenrad. Bevorzugt ist hier ein Lamellenträger vorgesehen, der auf den Stützring wirkt. Das Achswellenrad bleibt bei dieser Konstruktion während eines Sperrvorgangs belastungsfrei. Der Vorteil dieser Lösung liegt in dem größeren Toleranzbereich zwischen Stützring und Lagersitz des Axiallagers.

Eine weitere zweckmäßige Ausführung zeichnet sich dadurch aus, daß das Axiallager zwischen dem Ausgleichsgehäuse und dem Getriebegehäuse liegt. Bei dieser Ausgestaltung wirkt der Lamellensatz auf eine Anschlagschulter des Ausgleichsgehäuse, das die Belastung auf das Axiallager weiterleitet.

Weitere vorteilhafte Ausgestaltungen der Erfindung ergeben sich aus der nachfolgenden Beschreibung mehrerer Ausführungsbeispiele und der dazugehörigen Zeichnung. Es zeigen

Fig. 1 ein sperrbares Ausgleichsgetriebe mit einem in das Ausgleichsgehäuse hineingreifenden Übertragungsglied;

Fig. 2 ein sperrbares Ausgleichsgetriebe, bei dem vor dem Achswellenrad ein Stützring auf der Radabtriebswelle sitzt;

Fig. 3 eine Ausführung ähnlich der nach Fig. 2, jedoch mit einem Stützring zwischen Achswellenrad und Lamellensatz und

Fig. 4 eine Ausführung, bei der die Kräfte bei einem Sperrvorgang innerhalb des Ausgleichsgehäuses verlaufen.

Soweit sich die Teile gleichen, sind sie in allen Figuren mit den gleichen Bezugsziffern versehen. Außerdem werden Einzelheiten der Darstellungen, die nicht zur Erfindung gehören und die dem Fachmann ohne weiteres verständlich sind, nicht näher beschrieben.

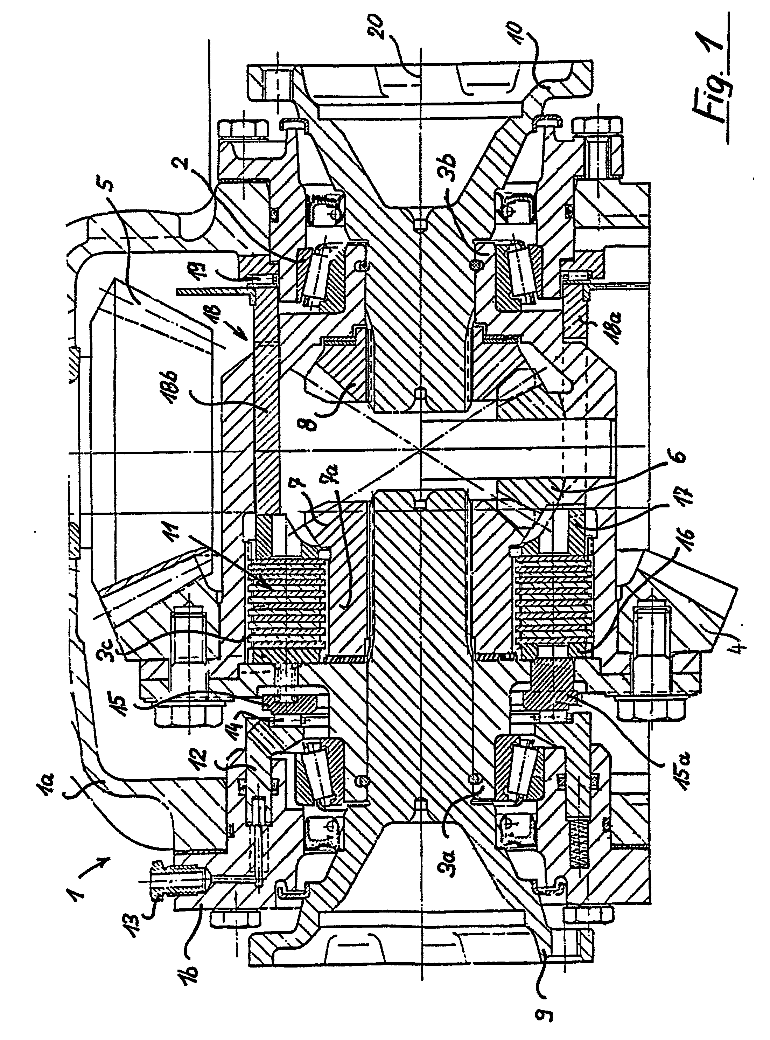

Fig. 1 zeigt ein sperrbares Ausgleichsgetriebe für Kraftfahrzeuge mit einem nur bruchstückhaft dargestellten Getriebegehäuse 1, bestehend aus mehreren, nicht näher beschriebenen Teilabschnitten. Über Radial-Wälzlager 2 ist ein Ausgleichsgehäuse 3 im Getriebegehäuse 1 drehbar gelagert. Dabei definiert eine Achse 20 allgemein die Hauptachse des Getriebes. Soweit im Text ohne nähere Bestimmung auf eine Achse Bezug genommen wird, handelt es sich immer um diese Achse 20. Am Ausgleichsgehäuse 3 ist ein Tellerrad 4 befestigt, das mit einem andeutungsweise dargestellten Antriebsritzel 5 kämmt. Innerhalb des Ausgleichsgehäuses 3 sind in bekannter Weise Ausgleichskegelräder 6 vorgesehen, wobei Fig. 1 lediglich das untere stellvertretend für die anderen zeigt. Diese Ausgleichsräder 6 kämmen mit Achswellenrädern 7 und 8. Die Achswellenräder 7, 8 wiederum sitzen über Keilverzahnungen verdrehfest auf Radabtriebswellen 9, 10, die über nicht näher dargestellte, weitere Wellenabschnitte die Kraftverbindung zu den Antriebsrädern herstellen. Die Radabtriebswellen 9, 10 sind innerhalb von Führungshälsen 3a, 3b des Ausgleichsgehäuses 3 geführt.

Das Achswellenrad 7 weist einen vorderen, mit dem Ausgleichskegelrad 6 kämmenden Zahnabschnitt auf, an den sich ein abgesetzter, zylindrischer und mit Axialnuten versehener Schaftabschnitt 7a anschließt. Koaxial zu diesem Schaftabschnitt 7a und ihm gegenüberliegend sieht das Ausgleichsgehäuse 3 in seinem Inneren ebenfalls einen Axialnutenabschnitt 3c vor. Zwischen diesen beiden Abschnitten ist ein Lamellensatz angeordnet, der insgesamt mit 11 bezeichnet ist. Er ist aufgebaut aus einzelnen Lamellen, die abwechselnd mit dem Abschnitt 3c des Ausgleichsgehäuses 3 oder dem Abschnitt 7a des Achswellenrades 7 in Antriebsverbindung stehen. Zu diesem Zweck weist die eine Art der Lamellen an ihren äußeren Umfängen entsprechende Eingriffschlitze auf, während die andere Art vergleichbare Schlitze an ihrem inneren Umfang besitzt. Die Lamellen des Lamellensatzes 11 können sich normalerweise ohne oder nur mit vernachlässigbarem Widerstand gegeneinander verdrehen. Werden sie jedoch gegeneinandergedrückt, verbinden sie reibschlüssig das Ausgleichsgehäuse 3 mit dem Achswellenrad 7 und wirken so als Ausgleichssperre.

Das Zusammenpressen der Lamellen bewirkt ein Ringkolben 12, der im Gehäuse 1 geführt ist und über einen Anschlußstutzen 13 und Zuführkanäle mit Druck beaufschlagbar ist. Das Druckmedium ist in diesem Fall Hydrauliköl. Die Druckverbindung zwischen Ringkolben 12 und Lamellensatz 11 geschieht über ein axiales Drucklager 14 und einer Druckplatte 15, die an ihrem Umfang verteilt zapfenartige Vorsprünge 15a aufweist. Mit diesen zapfenartigen Vorsprüngen 15a greift die Druckplatte 15 durch das Ausgleichsgehäuse 3 hindurch und beaufschlagt über eine weitere Distanzplatte 16 den Lamellensatz 11. Am gegenüberliegenden Ende des Lamellensatzes ist im Ausgleichsgehäuse ebenfalls ein Druckring 17 vorgesehen.

Ein Übertragungsglied 18 besteht aus einem Kreisring 18a mit daran angeformten gabelartigen Axialarmen 18b. Das Übertragungsglied 18 ist mit seinem Kreisring 18a verschiebbar auf einer äußeren Führung des Ausgleichsgehäuses 3 angeordnet. Dabei liegt die äußere Führung auf der dem Lamellensatz 11 gegenüberliegenden Seite des Ausgleichsgehäuses 3, also in Höhe des Achswellenrades 8 bzw. der Radabtriebswelle 10. Mit seinen Axialarmen 18b greift das Übertragungsglied 18 durch entsprechende Öffnungen in das Ausgleichsgehäuses 3 hinein und stößt mit den Armenden an die Druckplatte 17. Das andere Ende des Übertragungsgliedes 18 stützt sich über ein Axiallager 19 am Getriebegehäuse 1 ab.

Wie bereits erwähnt, wirkt im Normalbetrieb die Differentialsperre nicht. Das Ausgleichsgetriebe behält seine Ausgleichsfunktion, es erlaubt unterschiedliche Drehzahlen für die Radabtriebswellen 9, 10. Soll jedoch das Ausgleichsgetriebe gesperrt werden, beispielsweise weil ein Rad auf einem glatten Untergrund durchdreht, so wird über den Anschlußstutzen 13 dem Ringkolben 12 Druck zugeführt. Dieser bewegt sich in axialer Richtung nach rechts. Über das Drucklager 14 sowie den Druckring 15 und die Distanzplatte 16 wird der Lamellensatz 11 gegen die Druckplatte 17 ge-preßt. Diese stützt sich wiederum über das Übertragungsglied 18 und Axiallager 19 am Getriebegehäuse 1 ab. Die Lamellen des Lamellensatzes 11 werden derart aneinandergepreßt, daß sich zwischen ihnen eine reibschlüssige Verbindung einstellt und dadurch die Ausgleichswirkung aufgehoben ist. Dabei läßt sich die Sperrwirkung je nach Druck kontinuierlich steigern.

In Fig. 1 ist lediglich einem Achswellenrad, nämlich dem Achswellenrad 7 ein Lamellensatz 11 zugeordnet. Es ist jedoch ohne weiteres möglich, die gleiche Anordnung auch noch auf der gegen überliegenden Seite vorzusehen. Es wären dann lediglich zwei Druckanschlüsse für zwei getrennte Hydraulikdruckleitungen notwendig. Dies gilt sinngemäß auch für all die anderen nachfolgend beschriebenen Ausführungsbeispiele.

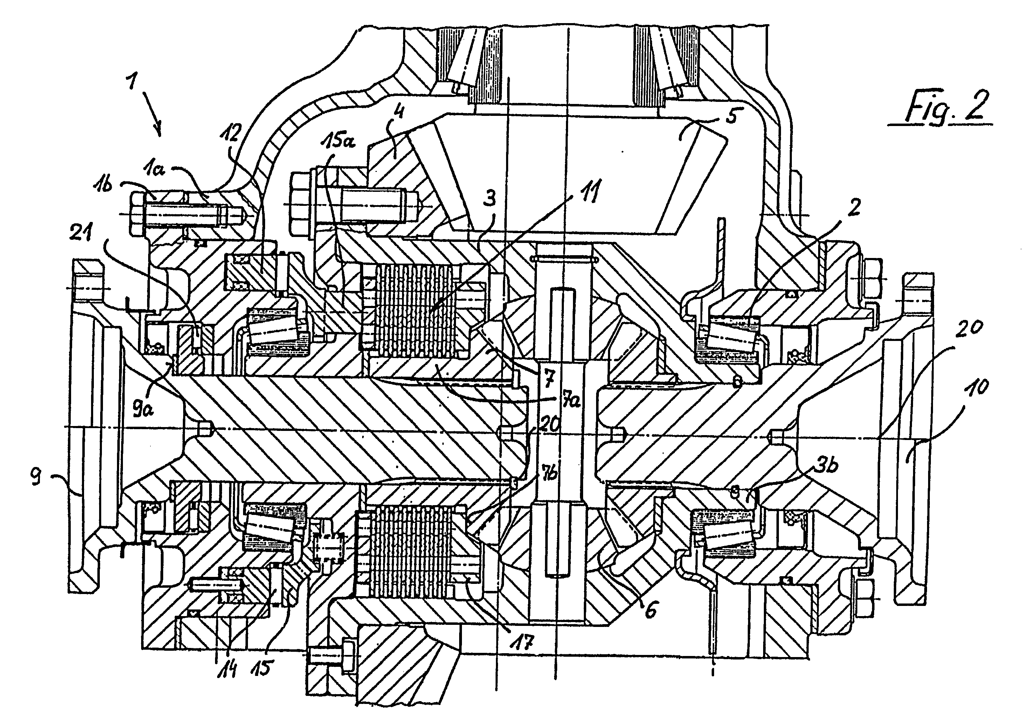

Die Ausführung nach Fig. 2 weist kein dem Übertragungsglied 18 nach Fig. 1 vergleichbares Bauteil auf. Vielmehr stützt sich hier der Druckring 17 an einer Ringschulter 7b des Achswellenrades 7 ab. Der Ringschulter 7b bildet sich durch den abgesetzten und die Lamellen aufnehmenden Abschnitt 7a und den eigentlichen, im Durchmesser größeren Zahnteil des Achswellenrades 7 aus. Das Achswellenrad 7 wiederum stößt mit seinem vorderen Abschnitt an einen Stützring 20, der auf der Radabtriebswelle 9 in einer Ringnut eingesetzt ist. Die Radabtriebswelle 9 selbst wiederum weist an ihrem aus dem Ausgleichsgehäuse 3 ragenden Ende einen Lagersitz 9a auf für die Aufnahme eines Axiallagers 21. Die andere Lagerschale des Axiallagers 21 befindet sich in einem entsprechend ausgeformten Abschnitt des Getriebegehäuses 1. Wird der Lamellensatz 11 über den Ringkolben 12 mit einer Anpreßkraft beaufschlagt, stützt er sich über den Druckring 17, das Achswellenrad 7, den Stützring 20, die Radabtriebswelle 9 und das Axiallager 21 am Getriebegehäuse 1 ab. Die Kräfte werden demnach über die Radabtriebswelle 9 zum Getriebegehäuse 1 zurückgeleitet.

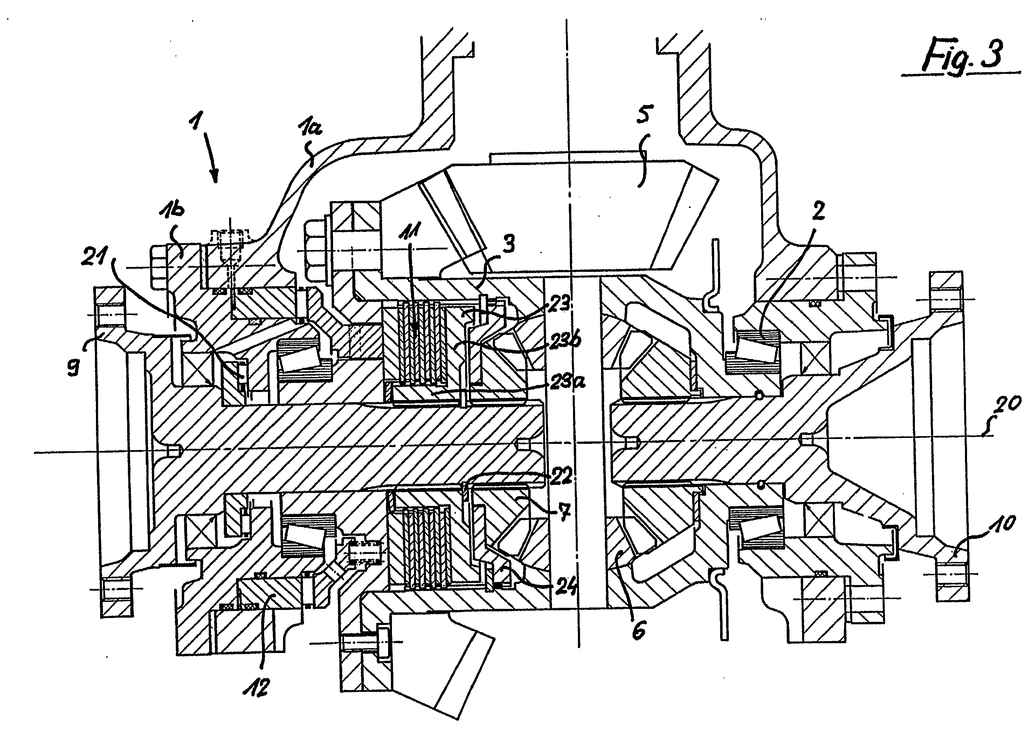

Die Ausführung nach Fig. 3 unterscheidet sich von der nach Fig. 2 dadurch, daß einmal der Stützring, hier mit 22 bezeichnet, hinter dem Achswellenrad 7 angeordnet ist. Außerdem sitzen die der Radabtriebswelle 9 zugeordneten Lamellen nicht direkt auf der Welle, sondern auf einem dazwischengeschalteten Lamellenträger 23. Der Lamellenträger 23 besteht aus einem zylindrischen, im Durchmesser reduzierten Rohrabschnitt 23, an den sich eine radial nach außen erstreckende Seitenwand 23b einstückig anschließt. Dabei ist die Seitenwand 23b dem Achswellenrad 7 zugewandt, ohne es jedoch zu berühren. Der Rohrabschnitt 23a des Lamellenträgers 23 ist über eine Keilverzahnung mit der Radabtriebswelle antriebsmäßig verbunden und weist eine weitere Keilverzahnung an seinem äußeren Umfang auf für den Eingriff der ihm zugeordneten Lamellen. Außerdem stützt sich der Lamellenträger mit seiner dem Achswellenrad 7 zugekehrten Stirnseite am Stützring 22 ab. Das Achswellenrad 7 selbst wird, wie bereits erwähnt, nicht vom Lamellenträger 23 beaufschlagt, es stößt vielmehr an ein Stützwand 24, die mit dem Ausgleichsgehäuse 3 verbunden ist. Beim Betätigen des Ringkolbens verlaufen die Kräfte ähnlich wie in Fig. 2 über den Schaft der Radabtriebswelle 9 zum Axiallager 21. Allerdings liegt das Achswellenrad 7 durch den nach innen verlagerten Stützring 22 außerhalb des Kraftflusses.

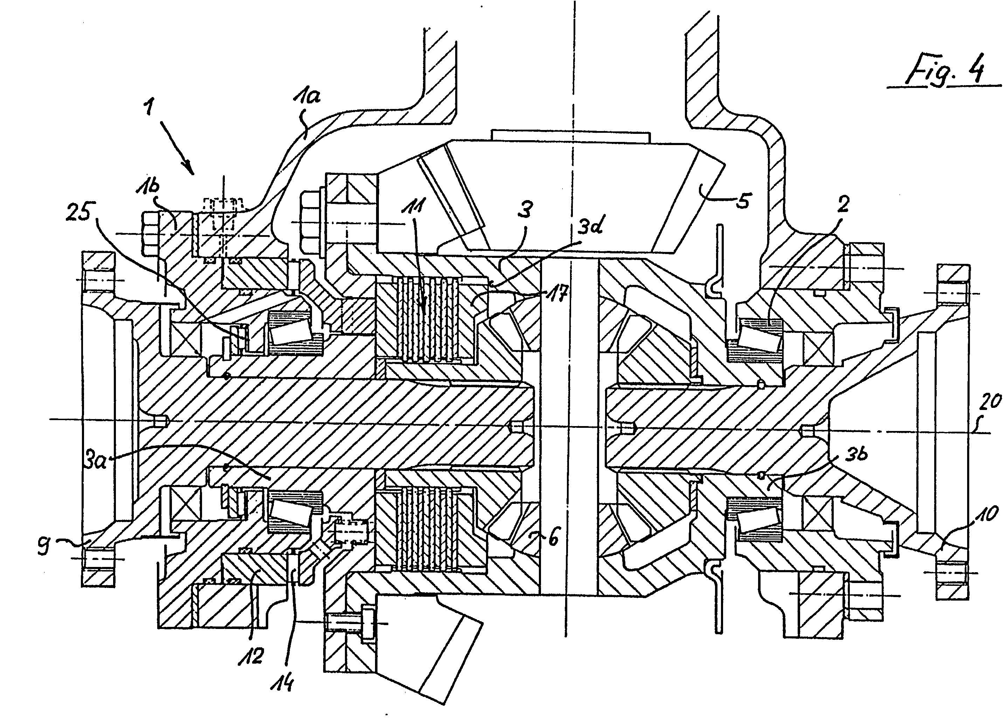

In Fig. 4 ist das vergleichbare Axialwellenlager, hier mit 25 bezeichnet, zwischen dem Führungshals 3a des Ausgleichsgehäuses 3 und dem Getriebegehäuse 1 vorgesehen. Dem Lamellensatz 11 ist wiederum einen Druckring 17 nachgeschaltet, der sich in dieser Ausführung an einer Anschlagschulter 3d des Ausgleichsgehäuses 3 abstützt. Die von dem Ringkolben 12 aufgebrachte Anpreßkraft wird über den Druckring 17 in das Ausgleichsgehäuse 3 eingeleitet und verläuft von dort zurück über das Axiallager 25 auf das Getriebegehäuse 1.

In Fig. 3 und 4 ist die Führung des Ringkolbens 12 in anderer Weise ausgeführt als in den Figuren 1 und 2. In den ersten Figuren ist jeweils in einem Gehäusedeckel 1b des Getriebegehäuses 1 ein entsprechender ringförmiger Einstich vorgesehen, innerhalb dem der Ringkolben 12 geführt ist.

In den Figuren 3 und 4 wird die Führung durch das Zusammensetzen des Getriebegehäuses aus einem Gehäuseabschnitt 1a und einem Gehäusedeckel 1b gebildet. Auf diese Weise läßt sich die Führung in einfacher Weise in den Gehäusedeckel 1b einarbeiten. Zu diesem Zweck weist der Gehäusedeckel 1b einen im Durchmesser verringerten Abschnitt auf, der eine äußere Zylinderfläche bildet. Das Gegenstück, nämlich die radial außen liegende Führungsfläche ist als innere Zylinderfläche in dem Gehäuseabschnitt 1b eingearbeitet. Beim aufgesetzten Gehäusedeckel 1b liegen sich diese beiden Zylinderflächen gegenüber und bilden den sich als Ringraum ergebenden Führungszylinder für den Ringkolben 12.

**Patentansprüche**

1. Sperrbares Ausgleichsgetriebe für Kraftfahrzeuge mit einem Getriebegehäuse (1) und einem darin drehbar gelagerten Ausgleichsgehäuse (3) das einen Lamellensatz (11) enthält, der zum Sperren des Ausgleichsgetriebes von der einen Seite her mit einer Anpreßkraft beaufschlagbar ist, dadurch gekennzeichnet, daß sich der beaufschlagte Lamellensatz (11) auf der anderen Seite über ein Axiallager (19, 21, 25) am Getriebegehäuse (1) abstützt.

2. Ausgleichsgetriebe nach Anspruch 1, dadurch gekennzeichnet, daß zwischen dem Lamellensatz (11) und dem Axiallager (19) ein in das Ausgleichsgehäuse (3) hineingreifendes Übertragungsglied (18) angeordnet ist.

3. Ausgleichsgetriebe nach Anspruch 2, dadurch gekennzeichnet, daß das Übertragungsglied (18) aus einem auf eine äußere Führung des Ausgleichsgehäuses (3) aufgeschobenen Kreisring (18a) besteht, der mit der einen Stirnseite am Axiallager (19) anliegt und dessen andere Stirnseite in gabelförmige, in das Ausgleichsgehäuse (3) hineingreifende und mit dem Lamellensatz (11) zusammenwirkende Axialarme (18b) übergeht.

4. Ausgleichsgetriebe nach Anspruch 1, bei dem der Lamellensatz einer Radabtriebswelle zugeordnet ist und mit seiner der beaufschlagenden Kraft abgewandten Seite mit einem auf der Radabtriebswelle angeordneten Stützring zusammenwirkt dadurch gekennzeichnet, daß das Axiallager (21) zwischen der Radabtriebswelle (9) und dem Getriebegehäuse (1) vorgesehen ist.

5. Ausgleichsgetriebe nach Anspruch 4, dadurch gekennzeichnet, daß der Stützring (20, 22) zwischen Achswellenrad (7) und Lamellensatz (11) angeordnet ist.

6. Ausgleichsgetriebe nach Anspruch 5, dadurch gekennzeichnet, daß auf der Radabtriebswelle (9) und hinter dem Achswellenrad (7) drehfest und axial verschiebbar ein Lamellenträger (23) vorgesehen ist und daß der Stützring (22) vor einer der beaufschlagenden Kraft abgewandten Stirnseite des Lamellenträgers (23) auf der Radabtriebswelle (9) angeordnet ist.

7. Ausgleichsgetriebe nach Anspruch 1, dadurch gekennzeichnet, daß sich der Lamellensatz (11) mit seiner der beaufschlagenden Kraft abgewandten Seite an einer Anschlagschulter (3d) des Ausgleichsgehäuse (3) abstützt und das Axiallager (25) zwischen dem Ausgleichsgehäuse (3) und dem Getriebegehäuse (1) vorgesehen ist.

8. Ausgleichsgetriebe nach Anspruch 7, bei dem der Lamellensatz einer Radabtriebswelle zugeordnet ist und sich die Radabtriebswelle durch einen Führungshals des Ausgleichsgehäuses erstreckt, dadurch gekennzeichnet, daß sich das Axiallager (25) zwischen dem freien Ende des Führungshalses (3a) und einer abgesetzten Anschlagsfläche des Getriebegehäuses (1) befindet.

9. Ausgleichsgetriebe nach einem der Ansprüche 1 bis 8, dadurch gekennzeichnet, daß der Führungszylinder eines das Lamellenpaket beaufschlagenden Ringkolbens (12) durch die äußere Zylinderfläche eines im Durchmesser verringerten Abschnitts eines Gehäusedeckels (1b) des Getriebegehäuses (1) und einer bei zusammengebautem Getriebegehäuse 1 dieser Zylinderfläche gegenüberliegenden inneren Zylinderfläche eines Gehäuseabschnitts (1a) gebildet ist.

## Claims

1. A lockable differential gear for motor vehicles having a gear housing (1) and a differential housing (3), rotatably mounted therein, which contains a plate set (11) which can be loaded with a pressure application force from the one side for the locking of the differential gear, characterised in that the loaded set of plates (11) is supported on the other side on the gear housing (1) through an axial bearing (19, 21, 25).

2. A differential gear according to Claim 1, characterised in that a transmission member (18) extending into the differential housing (3) is arranged between the plate set (11) and the axial bearing (19).

3. A differential gear according to Claim 2, characterised in that the transmission member (18) comprises an annulus (18a) pushed on to an external guide of the differential housing (3), which annulus rests with the one end face on the axial bearing (19) while its other end face merges into fork-shaped axial arms (18b) extending into the differential housing (3) and co-operating with the set of plates (11).

4. A differential gear according to Claim 1, in which the set of plates is allocated to a wheel drive shaft and cooperates with its side remote from the loading force with a support ring arranged on the wheel drive shaft, characterised in that the axial bearing (21) is provided between the wheel drive shaft (9) and the gear housing (1).

5. A differential gear according to Claim 4, characterised in that the support ring (20, 22) is arranged between drive shaft wheel (7) and plate set (11).

6. A differential gear according to Claim 5, characterised in that a plate carrier (23) is provided fast in rotation and axially displaceably on the wheel drive shaft (9) and behind the the drive shaft wheel (7) and in that the support ring (22) is arranged before an end face, remote from the loading force, of the plate carrier (23) on the wheel drive shaft (9).

7. A differential gear according to Claim 1, characterised in that the plate set (11) is supported with its side remote from the loading force on a stop shoulder (3d) of the differential housing (3) and the axial bearing (25) is provided between the differential housing (3) and the gear housing (1).

8. A differential gear according to Claim 7, in which the set of plates is allocated to a wheel drive shaft and the wheel drive shaft extends through a guide neck of the differential housing, characterised in that the axial bearing (25) is situated between the free end of the guide neck (3a) and a stepped stop face of the gear housing (1).

9. A differential gear according to any one of Claims 1 to 8, characterised in that the guide cylinder of one annular piston (12) loading the plate pack is formed by the outer cylindrical surface of a section of reduced diameter of a housing lid (1b) of the gear housing (1) and an inner cylindrical surface, lying opposite to this cylindrical surface when the gear housing (1) is assembled, of a housing section (1a).

## Revendications

1. Transmission différentielle verrouillable pour véhicules automobiles avec un carter (1) et une cage de différentiel (3) mobile, logée à l'intérieur de celui-ci, qui renferme un jeu de lamelles (11) pour verrouiller la transmission différentielle du côté qui peut être soumis à une force de pression, caractérisée en ce que, le jeu de lamelles sollicité s'appuie de l'autre côté par un palier axial (19, 21, 25) au carter de protection (1).

2. Transmission différentielle selon la revendication (1), caractérisée en ce qu'entre le jeu de lamelles (11) et le palier axial (19) est placé un élément de transfert (18) engrènant avec la cage de différentiel (3).

3. Transmission différentielle selon la revendication 2, caractérisée en ce que, l'élément de transfert (18) se compose d'une couronne (18a) coulissant sur un guide extérieur de la cage de différentiel (3), couronne qui avec une de ses faces frontales est située contre le palier axial (19) et dont l'autre face frontale se convertit en bras axiaux (18b), en forme de fourches, engrènant dans la cage de différentiel et agissant en commun avec le jeu de lamelles (11).

4. Différentiel selon la revendication 1 dans lequel le jeu de lamelles est associé à un arbre de sortie de pignon et coopère par son côté opposé à la force agissante avec une couronne d'appui placée sur l'arbre de sortie de pignon, caractérisé en ce que le palier axial (21) est prévu entre l'arbre de sortie de roue (9) et le carter de protection (1).

5. Transmission différentielle selon la revendication 4, caractérisée en ce que la couronne d'appui (20, 22) est placée entre le pignon de l'arbre d'essieu (7) et le jeu de lamelles (11).

6.) Transmission différentielle selon la revendication 5, caractérisée en ce que, sur l'arbre de sortie de pignon (9) et derrière le pignon de l'arbre d'essieu (7), résistant à la rotation et coulissable axialement, est prévu un support de lamelles (23) et en ce que la couronne d'appui (22) est placée sur l'arbre de sortie de pignon (9), devant une face frontale du support de lamelles (23), opposée à la force agissante.

7. Transmission différentielle selon la revendication 1, caractérisée en ce que le jeu de lamelles (11) s'appuie par son côté opposé à la force agissante à un épaulement d'arrêt (3d) de la cage de différentiel (3) et en ce que le palier axial (25) est prévu entre la cage de différentiel (3) et le carter (1).

8. Transmission différentielle selon la revendication 7, dans laquelle le jeu de lamelles est associé à un arbre de sortie de roue et l'arbre de sortie de roue se développe dans un manchon de guidage de la cage de différentiel, caractérisée en ce que le palier axial (25) se trouve entre l'extrémité libre du manchon de guidage (3a) et une surface de butée décalée du carter (1).

9. Transmission différentielle selon l'une des revendications 1 à 8, caractérisée en ce que le cylindre de guidage d'un piston annulaire (12) sollicitant le paquet de lamelles est formé par la surface cylindrique extérieure d'un tronçon d'un couvercle (1b) de diamètre plus étroit du carter (1) et d'une surface intérieure cylindrique d'un tronçon de carter (1a), située en face de la première surface cylindrique d'une section du carter 1a.

Fig. 1

Fig. 2

Fig. 3

EP 0 264 579 B1

_Fig. 4_

EP 0 264 579 B1